# EUROPEAN PATENT APPLICATION

(11) **EP 0 926 908 A1**
(43) Date of publication of application: **30.06.1999**
(21) Application number: 97204103.2
(22) Date of filing: 24.12.1997
(51) Int. Cl.: H04Q 3/00

(54) **Timeout handler in a service control point**

(71) Applicant: TELEFONAKTIEBOLAGET L M ERICSSON (publ), 126 25 Stockholm (SE)
(72) Inventor: Güngör, Ahmet, 3194 TC Hoogvliet (NL)
(74) Representative: Dohmen, Johannes Maria Gerardus

(57) **Abstract**

A method for the handling of time-monitored operations in an Intelligent Network (IN) telecommunications system (1), wherein a time-out event is generated at the expiry of a time-monitored operation invoked by an IN application (25). The time-monitored operations are classified into a number of types of operations (26). Time-out events (31) are processed (32) in accordance with a type of operations invoked, and the IN application (25) responds in accordance with the processed time-out event (31). The following types of operations are defined: class 1: operations which may provide a result or an error message on invoke; class 2: operations which may provide an error message on invoke; class 3: operations which may provide a result message on invoke; class 4: operations which provide no response message on invoke.

## Description

The present invention relates to the handling of operations in an Intelligent Network (IN) telecommunications environment and, more particularly, to the handling of time-monitored operations wherein a time-out event is generated at the expiry of a set time-limit.

### Background of the Invention

Intelligent Network (IN) telecommunications systems generally comprise so-called Service Switching Point (SSP) and Service Control Point (SCP) equipment. SSP equipment provides switching operations for delivering calls from a calling subscriber to a called subscriber, and the SCP equipment operates for controlling telecommunications and network services available to a subscriber.

Modern digital Public Switched Telecommunication Networks (PSTN) and Integrated Services Digital Networks (ISDN) are typical examples of IN telecommunications systems.

Equipment providing telecommunications and network services to a subscriber may be distributed through out the entire network such that SCP equipment, in order to provide services, have to invoke operations to be performed at remote equipment.

Assume an SCP requesting an operation from another functional entity, for example the activation of a specific action from which a result on an error message can be expected in return.

As will be appreciated by those skilled in the art, for several reasons, such a return message may not be received at the requesting SCP. In order to avoid unduly occupation of scarce resources, such operations are time-monitored. That is, if after expiry of a set time period no reply is received, a time-out event is generated. Time-out periods for operations in IN networks are specified in standardized protocols and specifications, such as CS1 in ETS1-Core-INAP-CS1.

However, the handling of time-out events in time-monitored operations are not specified.

### Summary of the Invention

Accordingly, it is an object of the present invention to provide an efficient method for the handling of time-out events in time-monitored operations in an IN telecommunications system.

It is a further object of the present invention to implement such a method in an IN telecommunications system.

According to the invention, in a first aspect thereof, there is provided a method for the handling of time-monitored operations in an Intelligent Network (IN) telecommunications system, wherein a time-out event is generated at the expiry of a time-monitored operation invoked by an IN application, comprising classifying the time-monitored operations into a number of types of operations, processing the time-out events in accordance with a type of operations invoked, and responding by the IN application in accordance with the processed time-out event.

In the method according to the invention, time-out event handling is made subject to the type of operations invoked by an IN application. That is, time-out events are processed in accordance with the type of operation established. Accordingly, the IN application may respond following the thus processed time-out event, each time in a predetermined manner.

By a proper classification of the types of operations, the time-out event handling of applications can be standardized, which benefits the efficiency of the processing of time-monitored operations by IN applications.

In a further embodiment of the method according to the invention, the following types of operations are established:
class 1: operations which may provide a result or an error message on invoke;
class 2: operations which may provide an error message on invoke;
class 3: operations which may provide a result message on invoke;
class 4: operations which provide no response message on invoke.

In accordance with the invention, in the case of a time-out event, for class 1 and class 3 operations the time-out event is processed in that the invoked operation is considered to have been failed, and for class 2 and class 4 operations the time-out event is processed in that the invoked operation is considered to have been successfully.

In this embodiment of the method according to the invention, it is assumed that operations are considered to have been failed if a result can be received by the invoking IN application, through such result has not been received at the time-out event. On the other hand, for operations which may provide an error message, and if such error message has not been received by the invoking IN application at the time-out event, the operation can be considered to have been successfully. In any case the length of the time-out period is chosen such that an operation can be completed under normal conditions.

In both cases there is a risk that the above assumption of failure or success of the operation is wrong. However, this risk is acceptable under normal communication conditions.

If an operation is considered to have been failed, following a still further embodiment of the method according to the invention, the IN application preferably responds by invoking the same operation again. Repeatedly invoking an operation may be accomplished by one and the same or different dialogues by the IN application.

In a second aspect the present invention provides an Intelligent Network (IN) telecommunications system, comprising configurations of Service Switching Point (SSP) and Service Control Point (SCP) equipment, arranged for the handling of time-monitored operations, wherein a time-out event is generated at the expiry of a time-monitored operation invoked by an IN application, comprising classifying means, for classifying time-monitored operations according to a number of predetermined types of operations, processing means for processing the time-out events in accordance with a type of operations invoked and means for transferring a processed time-out event to the IN application for responding in accordance with the processed time-out event.

In a preferred embodiment of the IN telecommunications system according to the invention, the classifying means are operative for defining the types of operations as:
class 1: operations which may provide a result or an error message on invoke;
class 2: operations which may provide an error message on invoke;
class 3: operations which may provide a result message on invoke;
class 4: operations which provide no response message on invoke, and
wherein the processing means are arranged such that in the case of a time-out event for class 1 and class 3 operations the time-out event is processed in that the invoked operation is considered to have been failed, and for class 2 and class 4 operations the time-out event is processed in that the invoked operation is considered to have been successfully.

In another preferred embodiment of the telecommunications system according to the invention, Service Control Point (SCP) equipment of the IN telecommunications system comprises time monitoring means, time-out event generation means, classifying means, processing means for processing the time-out events in accordance with a type of operations invoked, and means for transferring processed time-out events.

Implementation of the handling of time-monitored operations in the SCP equipment in accordance with the invention may be advantageously accomplished by one or both software and hardware implementations, customized to the needs of a particular system operator, if applicable.

The above-mentioned features and advantages of the invention are illustrated in the following description with reference to the enclosed drawings.

### Brief Description of the Drawings

Fig. 1 shows, in a schematic and illustrative manner, a simplified block diagram of a telecommunications system incorporating the method according to the present invention.
Fig. 2 shows a flow chart diagram of a preferred embodiment of the method according to the invention.
Fig. 3 shows, in a schematic and illustrative manner, a simplified block diagram of SCP equipment arranged for use in a telecommunications system according to the present invention.

### Detailled Description of the Embodiments

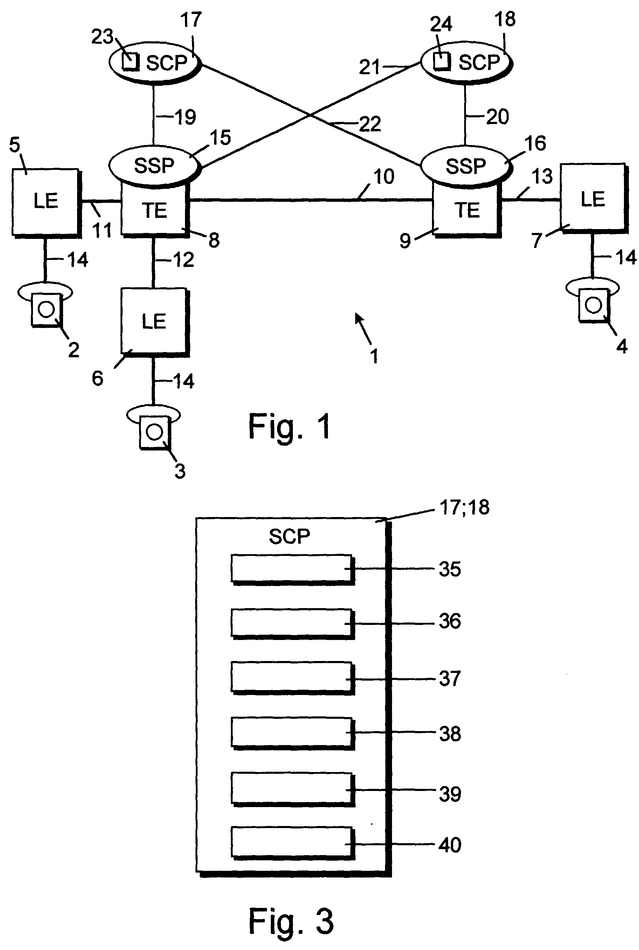

Fig. 1 shows a typical Intelligent Network (IN) telecommunications system 1, comprising configurations of Service Switching Point (SSP) and Service Control Point (SCP) equipment.

For clarification purposes, the telecommunications system shown is limited to two SSP/SCP configurations. Those skilled in the art will appreciate that in practice telecommunications systems may comprise a plurality of SSP and SCP equipment, whether or not arranged in paired configurations.

The IN telecommunications system 1 is illustrative for a typical Public Switched Telephone Network (PSTN)/Integrated Services Digital Network (ISDN). Subscribers or customers 2, 3, 4 connect through a Local Exchange (LE) 5, 6, 7 to at least one Trunk Exchange (TE) 8, 9, respectively. The TEs 8, 9 connect by a trunk line 10. LE 5, 6 and TE 8 connect by trunk lines 11, 12 and LE 7 and TE 9 connect by a trunk line 13. The subscribers 2, 3, 4 connect by subscriber or drop lines 14 to LE 5, 6, 7, respectively.

In the embodiment shown, TE 8, 9 are of the type comprising SSP equipment 15, 16, controlling the associated TE in order to establish the required transmission links for exchanging calls between the subscribers 2, 3, 4.

To each of the SSP 15, 16 an SCP is assigned, i.e. SCP 17, 18, respectively. The SCPs 17, 18 are operable for controlling telecommunications and network services available to the subscribers 2, 3, 4. In general, subscribers 2, 3 are allocated to SCP 17 whereas subscriber 4 is allocated to SCP 18.

The SSPs 15, 16 and the SCPs 17, 18 connect through signalling links 19, 20, 21, 22 as indicated.

The implementation of the present invention is schematically indicated by blocks 23 and 24 in SCP 17 and 18, respectively.

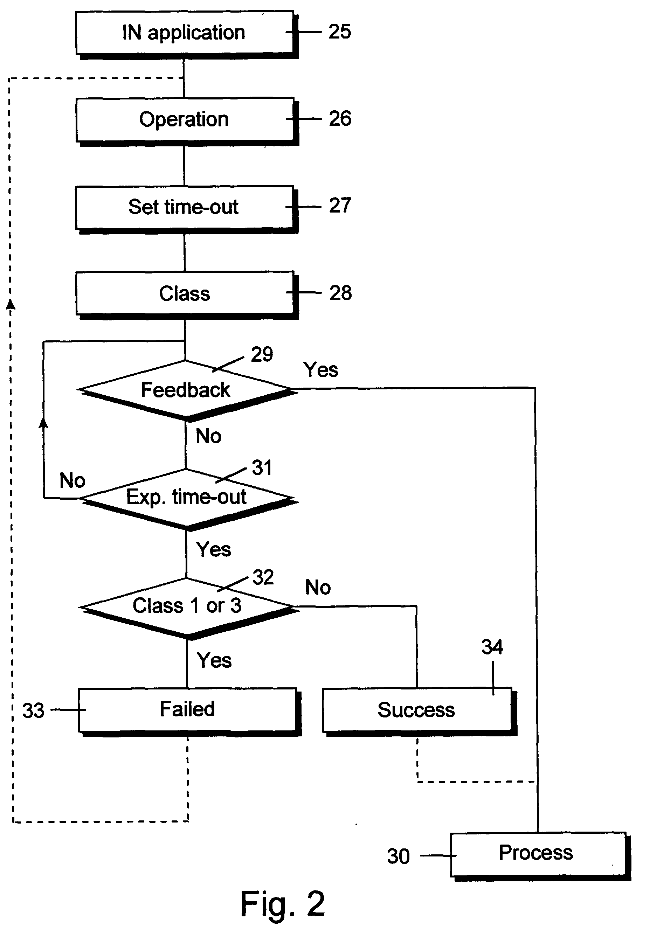

The method according to the invention will now be explained with reference to figs. 1 and 2, under the assumption that the customer or subscriber 2 operates a call centre or the like. Customer 2 is serviced by SCP 17.

Assume that a call has to be set-up to the call centre, i.e. subscriber 2, and that SCP 17 has to invoke operations by the call centre or another functional entity, in order to place the call. In practice, in order not to unduly occupy resources of the telecommunications system 1, if for some reason or another the required operation will not lead to the expected result or to no result at all, invoked operations are time-monitored by the SCP 17.

For the purpose of the present invention, the operations are classified dependent on whether or not a result or error signal or message may be expected by the SCP on the invoke of such operation. In the preferred embodiment of the invention, the following classification has been made:
class 1: operations which may provide a result or an error message on invoke;
class 2: operations which may provide an error message on invoke;
class 3: operations which may provide a result message on invoke;
class 4: operations which provide no response message on invoke.

If the expected result or error message is received by the SCP, it will act accordingly. However, if such message is not received at the expiration of the time period set, a time-out event is generated, for example in the form of a trigger or message or other suitable signalling.

If, at the time-out event, the result or error message has not been received, in accordance with the present invention, for class 1 and 3 operations the operation is considered to have been failed, because the expected feed-back has not been received. Accordingly, the application that has invoked the operation will receive a failure. As a result, the application may invoke the operation again, with the same or another dialogue, if applicable.

For class 2 and class 4 operations, if no error feed-back is received by the SCP 17 at the time-out event, it is assumed that the operation has been carried out successfully and the SCP 17, i.e. the application that invoked the operation, will continu accordingly. Thus, in each case, following the present invention, the application is provided with a feed-back even if an operation has been timed out.

Those skilled in the art will appreciate that, with the present invention, the applications itself do not have to provide for time-out handling, which is in advantage in building such applications.

Fig. 3 shows a flow chart diagram of the handling of time-monitored operations as described above. The normal direction of flow is from top to bottom. Otherwise it is indicated by an appropriate direction arrow.

Reference numeral 25 denotes an IN application running on an SCP. The application 25 invokes an operation 26 from a functional entity, such as the call centre of subscriber 2, for example.

With the invoke of this operation 26 a time-out period is set, such as indicated by block 27. Further, in accordance with the present invention, the class of the operation is identified in accordance with the classification set, as illustrated by block 28.

Next, dependent on the class of the operation, the application 25 is waiting for a feedback from the operation 26, i.e. decision block 29.

If the expected signal or message arives, i.e. decision "Yes" of block 29, the application 25 will process same, as indicated by block 30.

However, as long as no result or error signal or message is received, the set time-out period is watched by decision block 31. If the time-out period expires, i.e. decision "Yes" of block 31, the method proceeds to decision block 32.

Decision block 32 decides whether the operation belongs to class 1 or 3, i.e. decision "Yes" or to another class, i.e. class 2 or 4 decision "No".

With a class 1 or 3 operation, i.e. decision "Yes", it is assumed that the operation has been failed, block 33, whereas for classes 2 and 4 the operation is considered to be successful and the application will proceed accordingly, i.e. block 34.

In the case of a failure, the operation 26 may be repeated, indicated by the broken line from block 33 to block 26. A successful operation may lead to further processing of the application 25 via block 30, for example, as indicated by the broken line from block 34 to block 30.

Fig. 3 shows a simplified block diagram of an SCP 17, 18 for use in the telecommunications system 1 of the invention.

In addition to the known functionality of an SCP for servicing telecommunications in the IN telecommunications system 1, generally designated by block 35, the implementation of the invention as indicated by block 23 and 24 in fig. 1 comprises timer and time-monitoring means 36, time-out event generation means 37, operation classifying means 38, processing means 39 for processing the time-out events as disclosed above and means 40 for transferring processed time-out events to the particular application.

Those skilled in the art are regarded able to implement the means 36-40 without any inventive skills. In practice, the means 36-40 may be implemented by appropriate software and/or hardware measures in an SCP by a proper amendment of available control types controlling IN applications in an SCP and protocol handling functionalities.

The invention is not limited to the above disclosed embodiment in connection with calls to a call centre and performed in the SCP equipment of an IN telecommunications system. In practice, the present invention is suitable for handling numerous time-monitored operations in an IN telecommunications system, wherein a time-out event is generated at the expiry of a time-monitored operation.

## Claims

1. A method for the handling of time-monitored operations in an Intelligent Network (IN) telecommunications system, wherein a time-out event is generated at the expiry of a time-monitored operation invoked by an IN application, characterized by classifying said time-monitored operations into a number of types of operations, processing said time-out events in accordance with a type of operations invoked, and responding by said IN application in accordance with said processed time-out event.

2. A method according to claim 1, wherein the following types of operations are defined:
class 1: operations which may provide a result or an error message on invoke;
class 2: operations which may provide an error message on invoke;
class 3: operations which may provide a result message on invoke;
class 4: operations which provide no response message on invoke, and
in that in the case of a time-out event, for class 1 and class 3 operations said time-out event is processed in that the invoked operation is considered to have been failed, and for class 2 and class 4 operations said time-out event is processed in that the invoked operation is considered to have been successfully.

3. A method according to claim 2, wherein if an operation is considered to have been failed, said IN application responds by invoking the same operation again.

4. A method according to any of the previous claims, wherein said time-monitoring, time-out event generation and processing is performed in Service Control Point (SCP) equipment of an IN telecommunications system.

5. A method according to claim 4, wherein said IN application is operated by said SCP equipment.

6. An Intelligent Network (IN) telecommunications system, comprising configurations of Service Switching Point (SSP) and Service Control Point (SCP) equipment, arranged for the handling of time-monitored operations, wherein a time-out event is generated at the expiry of a time-monitored operation invoked by an IN application, characterized by classifying means, for classifying time-monitored operations according to a number of predetermined types of operations, processing means for processing said time-out events in accordance with a type of operations invoked and means for transferring a processed time-out event to said IN application for responding in accordance with said processed time-out event.

7. An IN telecommunications system according to claim 6, wherein said classifying means are operative for defining said types of operations as:
class 1: operations which may provide a result or an error message on invoke;
class 2: operations which may provide an error message on invoke;
class 3: operations which may provide a result message on invoke;
class 4: operations which provide no response message on invoke, and
wherein said processing means are arranged such that in the case of a time-out event for class 1 and class 3 operations said time-out event is processed in that the invoked operation is considered to have been failed, and for class 2 and class 4 operations said time-out event is processed in that the invoked operation is considered to have been successfully.

8. An IN telecommunications system according to claim 6 or 7, wherein Service Control Point (SCP) equipment of said IN telecommunications system comprises time monitoring means, time-out event generation means, classifying means, processing means for processing said time-out events in accordance with a type of operations invoked, and means for transferring processed time-out events.
